(19) Europäisches Patentamt
European Patent Office
Office européen des brevets

(11) Veröffentlichungsnummer : **0 399 311 B1**

(12) # EUROPÄISCHE PATENTSCHRIFT

(45) Veröffentlichungstag der Patentschrift :
**18.08.93 Patentblatt 93/33**

(51) Int. Cl.$^5$ : **C08G 18/32,** C08G 18/64, C09J 175/04

(21) Anmeldenummer : **90108893.0**

(22) Anmeldetag : **11.05.90**

(54) **Verwendung eines Epoxidhaltigen Zweikomponenten-Polyurethan-Systems als Klebstoff.**

(30) Priorität : **24.05.89 DE 3916932**

(43) Veröffentlichungstag der Anmeldung :
**28.11.90 Patentblatt 90/48**

(45) Bekanntmachung des Hinweises auf die Patenterteilung :
**18.08.93 Patentblatt 93/33**

(84) Benannte Vertragsstaaten :
**AT BE CH DE ES FR GB IT LI NL SE**

(56) Entgegenhaltungen :
**EP-A- 0 232 540**
**EP-A- 0 256 162**
**EP-A- 0 272 563**
**EP-A- 0 331 996**
**EP-A- 0 357 995**
**EP-A- 0 368 031**

(73) Patentinhaber : **BAYER AG**
**D-51368 Leverkusen (DE)**

(72) Erfinder : **Jansen, Bernard, Dr.**
**Roggendorfstrasse 65**
**D-5000 Köln 80 (DE)**
Erfinder : **Müller, Hans-Peter, Dr.**
**Weizenfeld 36**
**D-5060 Bergisch Gladbach 2 (DE)**
Erfinder : **Stepanski, Horst, Dr.**
**Raushofstrasse 20**
**D-5090 Leverkusen 3 (DE)**
Erfinder : **Arend, Guenter, Dr.**
**Claudiusstrasse 42**
**D-4047 Dormagen 1 (DE)**

EP 0 399 311 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft die Verwendung von Zweikomponenten-Polyurethan-Systemen verbesserter Flexibilität mit einem Epoxidanteil, als Klebstoffe welche insbesondere zum Verkleben von SMC (sheet moulding compounds) sowie von Metallen sehr geeignet sind.

Zweikomponenten-Polyurethanklebstoffe, die auf der Kombination von Polyurethanen mit Epoxiden beruhen, sind seit langem und in vielen unterschiedlichen Variationen bekannt, besitzen aber auch einige Nachteile. So sind z.B. die in US-A-4 613 60, US-A-4 726 868, EP-A-279 721 und EP-A-0 256 162 beschriebenen Zweikomponenten-Polyurethanklebstoffsysteme zu nennen, die dadurch funktionieren, daß man die Isocyanatkomponente mit einem Polyol-Epoxid-Gemisch, welches die Katalysatoren beinhaltet, zur Reaktion bringt. Es ist sicher richtig, daß bei Verwendung eines Polyol-Epoxid-Gemisches als zweite Komponente die Auswahl der verwendbaren Katalysatoren aufgrund möglicher Nebenreaktionen schon stark eingeschränkt ist, damit die Lagerstabilität des Gemisches gewährleistet bleibt. Nachteilig ist die eingeschränkte Auswahl an möglichen Katalysatoren.

Darüber hinaus gibt es noch die Gruppe der Systeme, bei denen der Epoxidgehalt in der Isocyanatkomponente enthalten ist. Gemäß der US-A-4 498 408 ist die eine Komponente ein Epoxid-Isocyanat-Gemisch und die andere Komponente eine Mischung aus einem Polyol und einem Amin, welche sowohl Urethanisierungs- als auch Epoxidaushärtekatalysatoren enthält. Gemäß der US-A-4 740 539 ist ein Epoxid Bestandteil der Isocyanatkomponente während als zweite Komponente ein langkettiges Amin vorliegt, dem ein Epoxidaushärtekatalysator zugegeben wird. Gemäß der US-A-4 740 539 soll die Bildung zweier voneinander unabhängiger Polymernetzwerke (inter-penetrating network) erfolgen.

Allen Systemen mit Isocyanat/Epoxid-Gemischen ist jedoch gemeinsam, daß die Epoxide möglichst frei von Hydroxylfunktionen sein müssen, damit keinerlei Nebenreaktionen die Lagerstabilität beeinträchtigen, denn Gemische dieser Art sind bekanntermaßen nur begrenzte Zeit haltbar und verharzen schnell.

Aus der DE-A-36 44 382 sind Verfahren zur zweistufigen Herstellung von Formkörpern durch Umsetzung eines organischen Polyisocyanates und eines Epoxides bekannt, unter Verwendung eines alkylierend wirkenden Sulfonsäurealkylesters von Methyliodid oder von Dimethylsulfat und gegebenenfalls Hydroxylgruppen enthaltenden Hilfs- und Zusatzmitteln. Die erhaltenen Harze können als Klebstoff eingesetzt werden, weisen aber nicht die erfindungsgemäß geforderte Flexibilität auf.

Ähnliche Systeme wie sie gemäß vorliegender Erfindung eingesetzt werden, sind aus EP-A 331 996, EP-A 357 995 und EP-A 368 031 bekannt. Diese Systeme eignen sich jedoch weniger gut als Klebstoffe.

Der Erfindung lag die Aufgabe zugrunde, ein Zweikomponenten-Polyurethanklebstoffsystem mit verbesserter Lagerstabilität und Flexibilität zur Verfügung zu stellen.

Gegenstand der Erfindung ist daher die Verwendung eines Zweikomponenten-Systems, enthaltend eine Komponente a) mit wenigstens einem Isocyanat und wenigstens einem Epoxid und eine Komponente b) mit wenigstens einer NCO-reaktiven Verbindung, dadurch gekennzeichnet, daß enthalten sind:

a) eine lagerstabile Mischung mit

a1) wenigstens einem organischen Polyisocyanat und

a2) wenigstens einem durch Umsetzung mit einem Alkylierungsmittel gegenüber der Reaktion mit a1) stabilisierten Epoxid und

b) wenigstens eine lagerstabile Komponente, ausgewählt aus:

b1) einer Verbindung, die zugleich wenigstens eine isocyanatreaktive Hydroxyl- und wenigstens eine isocyanatreaktive Aminogruppe trägt oder

b2) einer Verbindung mit wenigstens 2 Hydroxylgruppen und gegebenenfalls b3) zusätzlich einer Verbindung mit wenigstens 2 Aminogruppen oder

beliebige Mischungen daraus, in einer Menge, daß das NCO/OH-Äquivalentverhältnis bezogen auf die Isocyanat-Menge der Komponente a) und die Hydroxylgruppen der Komponente b) weniger als 2:1 beträgt, als Zweikomponenten-Klebstoff.

In einer bevorzugten Ausführungsform sind in den Teilkomponenten a) und b) weitere übliche Hilfs- und Zusatzstoffe a3) und b2) enthalten. In einer besonders bevorzugten Ausführungsform enthält die Teilkomponente b) Katalysatoren b2) insbesondere aus der Gruppe der tertiären Amine, welche in einer solchen Menge enthalten sein sollten, daß die Gesamtmischung pro 100 g mindestens 0,005 Mol tertiären Aminstickstoff enthält unter Berücksichtigung des gegebenenfalls in der Komponente b) enthaltenen tertiären Stickstoffs.

In einer weiteren bevorzugten Ausführungsform werden die Mengenverhältnisse der Komponenten a1) und a2) so eingestellt, daß in der gesamten Komponente a) 5 bis 40 Gew.-%, bevorzugt 10 bis 30 Gew.-% Bisglycidylether des Bisphenols A oder äquivalente Mengen anderer epoxidhaltiger Verbindungen enthalten sind und daß auf 1 Mol Isocyanatgruppen der gesamten Komponente a) 0,05 bis 0,95 Mol isocyanatreaktive Gruppen der gesamten Komponente b) entfallen.

In einer besonders bevorzugten Ausführungsform handelt es sich bei den isocyanatreaktiven Gruppen der Komponente b1) um Hydroxyl- und Aminogruppen, wobei insbesondere der Anteil der Aminogruppen 1 bis 15, insbesondere 2 bis 13 Mol-%, bezogen auf die Summe aus Hydroxyl- und Aminogruppen, beträgt.

Als Isocyanatkomponenten kommen vor allen Dingen Verbindungen der folgenden Formel in Frage:

$$Q\,(NCO)_n,$$

in der
n = 2-4, vorzugsweise 2, und
Q einen aliphatischen Kohlenwasserstoffrest mit 2-18, vorzugsweise 6-10 C-Atomen,
einen cycloaliphatischen Kohlenwasserstoffrest mit 4-15, vorzugsweise 5-10 C-Atomen,
einen aromatischen Kohlenwasserstoffrest mit 6-15, vorzugsweise 6-13 C-Atomen,
oder einen araliphatischen Kohlenwasserstoffrest mit 8-15, vorzugsweise 8-13 C-Atomen bedeuten.

Besonders bevorzugte Polyisocyanate sind Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethylcyclohexan, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4',4"-triisocyanat oder Polyphenyl-polymethylenpolyisocyanate, wie sie durch Anilin-Formaldehyd-Kondensation und anschließende Phosgenierung erhalten werden.

Geeignete höhermolekulare Polyisocyanate sind Modifizierungsprodukte derartiger einfacher Polyisocyanate, d.h. Polyisocyanate mit z.B. Isocyanurat-, Carbodiimid-, Allophanat-, Biuret- oder Uretdion-Struktureinheiten, wie sie nach an sich bekannten Verfahren des Standes der Technik aus den beispielhaft genannten einfachen Polyisocyanaten der oben genannten allgemeinen Formel hergestellt werden können. Unter den höhermolekularen, modifizierten Polyisocyanaten sind insbesondere die aus der Polyurethanchemie bekannten Prepolymeren mit endständigen Isocyanatgruppen des Molekulargewichtsbereichs 400 bis 10.000, vorzugsweise 600 bis 8.000 und insbesondere 800 bis 5.000 von Interesse. Diese Verbindungen werden in an sich bekannter Weise durch Umsetzung von überschüssigen Mengen an einfachen Polyisocyanaten der beispielhaft genannten Art mit organischen Verbindungen mit mindestens zwei gegenüber Isocyanatgruppen reaktionsfähigen Gruppen, insbesondere organischen Polyhydroxylverbindungen hergestellt. Geeignete derartige Polyhydroxylverbindungen sind sowohl einfache mehrwertige Alkohole des Molekulargewichtsbereichs 62 bis 599, vorzugsweise 62 bis 200 wie z.B. Ethylenglykol, Trimethylolpropan, Propandiol-1,2 oder Butandiol-1,2, insbesondere jedoch höhermolekulare Polyetherpolyole und/oder Polyesterpolyole der aus der Polyurethanchemie an sich bekannten Art mit Molekulargewichten von 600 bis 8.000, vorzugsweise 800 bis 4.000, die mindestens zwei, in der Regel 2 bis 8, vorzugsweise aber 2 bis 4 primäre und/oder sekundäre Hydroxylgruppen aufweisen. Selbstverständlich können auch solche NCO-Prepolymere eingesetzt werden, die beispielsweise aus niedermolekularen Polyisocyanaten der beispielhaft genannten Art und weniger bevorzugten Verbindungen mit gegenüber Isocyanatgruppen reaktionsfähigen Gruppen wie z.B. Polythioetherpolyolen, Hydroxylgruppen aufweisenden Polyacetalen, Polyhydroxypolycarbonaten, Hydroxylgruppen aufweisenden Polyesteramiden oder Hydroxylgruppen aufweisenden Copolymerisaten olefinisch ungesättigter Verbindungen erhalten worden sind. Zur Herstellung der NCO-Prepolymeren geeignete Verbindungen mit gegenüber Isocyanatgruppen reaktionsfähigen Gruppen, insbesondere Hydroxylgruppen, sind beispielsweise die in US-PS 4 218 543, Kolonne 7, Zeile 29 bis Kolonne 9, Zeile 25 beispielhaft offenbarten Verbindungen. Bei der Herstellung der NCO-Prepolymeren werden diese Verbindungen mit gegenüber Isocyanatgruppen reaktionsfähigen Gruppen mit einfachen Polyisocyanaten der oben beispielhaft genannten Art unter Einhaltung eines NCO/OH-Äquivalentverhältnisses von ca. 1,5:1 bis 20:1, vorzugsweise 5:1 bis 15:1 zur Umsetzung gebracht. Die NCO-Prepolymeren weisen im allgemeinen einen NCO-Gehalt von 2,5 bis 25, vorzugsweise 6 bis 22, Gew.-% auf. Hieraus geht bereits hervor, daß im Rahmen der vorliegen Erfindung unter "NCO-Prepolymeren" bzw. unter "Prepolymeren mit endständigen Isocyanatgruppen" sowohl die Umsetzungsprodukte als solche als auch ihre Gemische mit überschüssigen Mengen an nicht umgesetzten Ausgangspolyisocyanaten, die oft auch als "Semiprepolymere" bezeichnet werden, zu verstehen sind.

Für die erfindungsgemäße Verwendung besonders bevorzugte Polyisocyanatkomponenten a1) sind die in der Polyurethanchemie üblichen technischen Polyisocyanate, d.h. Hexamethylendiisocyanat, 1-Isocyanato-3,3,5-trimethyl-5-isocyanatomethyl-cyclohexan (Isophorondiisocyanat, abgekürzt: IPDI), 4,4'-Diisocyanatodicyclohexylmethan, 2,4-Diisocyanatotoluol, dessen technische Gemische mit 2,6-Diisocyanatotoluol, 4,4'-Diisocyanatodiphenylmethan, dessen Gemische mit den entsprechenden 2,4'- und 2,2'-Isomeren, Polyisocyanatgemische der Diphenylmethanreihe wie sie durch Phosgenierung von Anilin/Formaldehyd-Kondensaten in an sich bekannter Weise gewonnen werden können, die Biuret- oder Isocyanuratgruppen aufweisenden Modifizierungsprodukte dieser technischen Polyisocyanate und insbesondere NCO-Prepolymere der genannten

Art auf Basis dieser technischen Polyisocyanate einerseits und den beispielhaft genannten einfachen Polyolen und/oder Polyetherpolyolen und/oder Polyesterpolyolen andererseits, sowie beliebige Gemische derartiger Polyisocyanate.

Bei der Epoxid-Komponente a2) handelt es sich um mindestens ein organisches Epoxid, d.h. vorzugsweise um mindestens eine organische Verbindung die pro Molekül 1 bis 4, insbesondere 1 bis 2 Epoxidgruppen bei einem Epoxidäquivalentgewicht von 70 bis 500, vorzugsweise 170 bis 220 aufweist. Geeignet sind Monoepoxide wie beispielsweise Phenoxypropylenoxid, Styroloxid oder Glycidalkohol oder höherfunktionelle Polyepoxide wie beispielsweise Polyglycidylether mehrwertiger Phenole, insbesondere von Bisphenol A, aber auch weiterer Bisphenole der allgemeinen Formel:

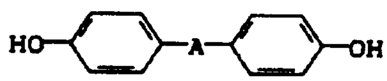

mit A = -$SO_2$-, -CO-, -O-, -S-,

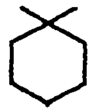 , 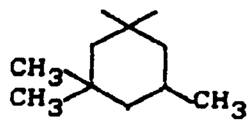 ;

Polyepoxidverbindungen auf der Basis von aromatischen Aminen, insbesondere Bis-(N-epoxypropyl)-anilin, N,N'-Dimethyl-N,N'-diepoxypropyl-4,4'-diaminodiphenylmethan und N-Diepoxypropyl-4-aminophenylglycidylether; Polyglycidylester aus cycloaliphatischen Dicarbonsäuren, insbesondere Hexahydrophthalsäurediglycidylester und Polyepoxide aus dem Umsetzungsprodukt von n Molen Hexahydrophthalsäureanhydrid und 1 Mol eines Polyols mit n Hydroxylgruppen (n = ganze Zahl von 2 bis 6), insbesondere 3 Mol Hexahydrophthalsäureanhydrid und einem Mol 1,1,1-Trimethylolpropan, 3,4-Epoxycyclohexylmethan-3,4-epoxycyclohexancarboxylat.

Die Epoxide a2) liegen in den erfindungsgemäß verwendeten Komponenten a) in bezüglich ihrer Reaktivität gegenüber Isocyanatgruppen inhibierter, d.h. in stabilisierter Form vor. Diese Stabilisierung der Epoxide erfolgt mittels einer Wärmebehandlung bei 30 bis 150° C, vorzugsweise 80 bis 130° C in Gegenwart eines Alkylierungsmittels, welches im allgemeinen in einer Menge von 0,005 bis 1 Gew.-%, vorzugsweise 0,05 bis 0,25 Gew.-%, bezogen auf das Gewicht des Epoxids, eingesetzt wird. Die Wärmebehandlung erfolgt im allgemeinen während eines Zeitraums von 15 bis 60 Minuten und kann sowohl in Abwesenheit der Polyisocyanatkomponente a1) als auch in Gegenwart zumindest eines Teils dieser Komponente stattfinden. Dies bedeutet, daß die Zugabe des Alkylierungsmittels und auch die anschließende Wärmebehandlung sowohl vor der Vereinigung des Epoxids mit dem Polyisocyanat als auch nach erfolgter Abmischung des Epoxids mit zumindest einem Teil des Polyisocyanats stattfinden können.

Geeignete Alkylierungsmittel sind beispielsweise Methyliodid, Dimethylsulfat oder vorzugsweise Sulfonsäurealkylester des Molekulargewichtsbereichs 110 bis 250 mit 1 bis 4 Kohlenstoffatomen im Alkylrest. Hierzu gehören sowohl aliphatische Sulfonsäurealkylester wie n-Butansulfonsäuremethylester, n-Perfluorbutansulfonsäuremethylester, n-Hexansulfonsäureethylester als auch aromatische Sulfonsäurealkylester wie Benzolsulfonsäuremethylester, -ethylester oder -n-butylester, p-Toluolsulfonsäuremethylester, -ethylester oder -m-butylester, 1-Naphthalinsulfonsäuremethylester, 3-Nitrobenzolsulfonsäure-methylester oder 2-Naphthalinsulfonsäuremethylester. Die beispielhaft genannten aromatischen Sulfonsäureester sind bevorzugt. Besonders bevorzugt wird p-Toluolsulfonsäuremethylester verwendet.

Im übrigen liegen in der Komponente a) die Epoxide 2a) in einer solchen Menge vor, daß auf 100 g der Komponente a) 0,005 bis 0,25, vorzugsweise 0,01 bis 0,2 Mol Epoxidgruppen entfallen.

Zu den gegebenenfalls mitzuverwendenden Hilfs- und Zusatzstoffen a3) zählen beispielsweise Füllstoffe, Farbstoffe und Pigmente.

Als Füllstoffe, insbesondere verstärkend wirkende Füllstoffe, seien beispielhaft genannt: silikatische Mineralien, beispielsweise Schichtsilikate wie Antigorit, Serpentin, Hornblenden, Amphibole, Chrisotil, Talkum; Metalloxide wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Asbestmehl u.a. Vorzugsweise verwendet werden natürliche und synthetische faserförmige Materialien wie Asbest, Wollastonit und insbesondere Glasfasern verschiedener Länge, die gegebenenfalls geschlichtet sein können.

Füllstoffe können einzeln oder als Gemisch verwendet werden.

Die Füllstoffe werden, falls überhaupt, der Reaktionsmischung vorteilhafterweise in Mengen von bis zu

50 Gew.-%, vorzugsweise bis zu 30 Gew.-%, bezogen auf das Gewicht der Komponenten a) und b), zugegeben.

Nähere Angaben über die üblichen Hilfs- und Zusatzstoffe sind der Fachliteratur, beispielsweise der Monographie von J.H. Saunders und K.C Frisch "High Polymers" Band XVI, Polyurethanes, Teil 2 und 7, Verlag Interscience Publishers 1962 bzw. 1964, zu entnehmen.

Bei der Komponente b der erfindungsgemäß verwendeten Systeme handelt es sich um mindestens eine organische Verbindung des Molekulargewichtsbereichs 62 bis 12 000, vorzugsweise 62 bis 6000 mit 2 bis 8, vorzugsweise 2 bis 5 gegenüber Isocyanatgruppen reaktionsfähigen Gruppen, vorzugsweise aromatischen und aliphatischen Aminofunktionen oder Hydroxylgruppen, besonders bevorzugt sind primäre aromatische und primäre und sekundäre aliphatische Aminofunktionen, sowie primäre aliphatische Hydroxylfunktionen.

Geeignete Verbindungen b1), die zugleich wenigstens eine Hydroxyl- und wenigstens eine Aminogruppe tragen, sind

-2-Aminoethanol $NH_2$-$(CH_2)_2$-OH
-3-Amino-1-propanol $NH_2$-$(CH_2)_3$-OH
-1-Amino-2-propanol $CH_3$-HC(OH)-$CH_2$-$NH_2$
-2-Amino-1-butanol $CH_3$-$CH_2$-CH($NH_2$)-$CH_2$-OH
-2-Amino-2-methyl-propanol $NH_2$-CH$(CH_3)_2$-$CH_2$-OH
-2-Amino-2-methyl-1,3-propandiol $CH_3$-C($CH_2$-OH$)_2$-$NH_2$
-2-Amino-2-hydroxymethyl-1,3-propandiol $NH_2$-C ($CH_2$-OH$)_3$
- hydrierte Aminophenole des Typs

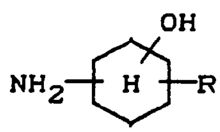

worin R $CH_3$, $C_2H_5$, Cl oder $NO_2$ bedeutet.

Als Komponente b2) eignen sich sowohl niedermolekulare mehrwertige Alkohole (Molekulargewichtsbereich 62 bis 400) wie Ethylenglykol, Diethylenglykol, 1,4-Dihydroxybutan, 1,6-Dihydroxyhexan, Trimethylolpropan, Glycerin, Pentaerythrit, Sorbit oder Saccharose, als auch höhermolekulare Polyhydroxylverbindungen (Molekulargewichtsbereich 400 bis 12 000, vorzugsweise 400 bis 6000) wie beispielsweise Polyhydroxypolyether der aus der Polyurethanchemie an sich bekannten Art wie sie durch Alkoxylierung von geeigneten Startermolekülen wie den beispielhaft genannten mehrwertigen Alkoholen oder auch von Ammoniak oder Aminen wie Ethylendiamin, Hexamethylendiamin, 2,4-Diaminotoluol, Anilin, oder Aminoalkoholen wie Ethanol unter Verwendung von Propylenoxid und/oder Ethylenoxid in beliebiger Reihenfolge dieser Alkylenoxide in an sich bekannter Weise zugänglich sind. Bei der Alkoxylierung von Aminen werden Polyole mit tertiärem Stickstoff erhalten, die die Reaktion zwischen Isocyanat-haltigen und Hydroxylgruppenhaltigen Verbindungen und die Isocyanattrimerisierung katalysieren.

Ferner geeignet sind Polyesterpolyole b2), wie sie durch Umsetzung der beispielhaft genannten niedermolekularen Alkohole mit mehrwertigen Carbonsäuren wie Adipinsäure, Phthalsäure, Hexahydrophthalsäure, Tetrahydrophthalsäure oder den Anhydriden dieser Säuren in an sich bekannter Weise zugänglich sind.

Ebenfalls geeignet sind solche höhermolekularen Polyhydroxypolyether, in denen hochmolekulare Polyaddukte bzw. Polykondensate oder Polymerisate in feindisperser, gelöster oder aufgepfropfter Form vorliegen. Derartige modifizierte Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen ablaufen läßt. Derartige Verfahren sind beispielsweise in DE-AS 1 168 075 und 1 260 142, sowie DE-A-2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäß US-A-3 869 413 bzw. DE-A-2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern (US-A-3 383 351, 3 304 273, 3 523 093, 3 110 695; DE-A-1 152 536) oder Polycarbonatpolyolen (DE-PS 1 769 795; US-A-3 637 909) erhalten werden, sind für die erfindungsgemäße Verwendung als Komponente b) geeignet. Bei Verwendung von Polyetherpolyolen, welche gemäß DE-A-2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen

(Meth)acrylsäureestern modifiziert wurden, erhält man Kunststoffe von besonderer Flammwidrigkeit.

Vertreter der genannten erfindungsgemäß als Verbindungen b) zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben.

In einer besonders bevorzugten Ausführungsform enthält die Komponente b2) ein Gemisch aus kurzkettigen Polyolen der Funktionalitäten 2 und 4 und ein langkettiges Polyol der Funktionalität 2.

Im übrigen enthält die Komponente b auch Aminfunktionen in Form der Komponente b3), insbesondere niedermolekulare aromatische oder aliphatische Diamine vorzugsweise mit einem Molekulargewicht bis 300. Bevorzugt sind dabei aromatische Diamine wie 1,4-Diaminobenzol, 2,4-Diaminotoluol, 2,4'-und/oder 4,4'-Diaminodiphenylmethan oder vorzugsweise solche Diamine, die zumindest in jeweils einer ortho-Stellung zu den Aminogruppen einen Alkylsubstituenten aufweisen, insbesondere um solche, die in ortho-Stellung zu der ersten Aminogruppe mindestens einen Alkylsubstituenten und in ortho-Stellung zur zweiten Aminogruppe zwei Alkylsubstituenten mit jeweils 1 bis 3 Kohlenstoffatomen aufweisen, besonders bevorzugt um solche, die in jeweils mindestens einer ortho-Stellung zu den Aminogruppen einen Ethyl-, n-Propyl- und/oder Isopropylsubstituenten und gegebenenfalls in weiteren ortho-Stellungen zu den Aminogruppen Methylsubstituenten aufweisen. Zu diesen bevorzugten bzw. besonders bevorzugten Diaminen gehören 2,4-Diaminomesytylen, 1,3,5-Triethyl-2,4-diaminobenzol, 1,3,5-Triisopropyl-2,4-diaminobenzol, 1-Methyl-3,5-diethyl-2,4-diaminobenzol, dessen technischen Gemische mit 1-Methyl-3,5-diethyl-2,6-diaminobenzol, 4,6-Dimethyl-2-ethyl-1,3-diaminobenzol, 3,5,3',5'-Tetraethyl-4,4'-diaminodiphenylmethan, 3,5,3',5'-Tetraisopropyl-4,4'-diaminodiphenylmethan oder 3,5-Diethyl-3',5'-diisopropyl 4,4'-diaminodiphenylmethan. Beliebige Gemische derartiger aromatischer Diamine können ebenfalls eingesetzt werden.

Besonders bevorzugte aliphatische Diamine sind Isophorondiamin, Bis-(4-aminocyclohexyl)-methan, 1,4-Diaminocyclohexan, Ethylendiamin und seine Homologen und Piperazin.

Ferner als Komponente b3) geeignet sind endständige aromatische primäre Aminogruppen aufweisende Polyetherpolyamine wie sie beispielsweise gemäß den in EP-A-79 536, DE-A-2 948 419, DE-A-2 019 432, DE-A-2 619 840, US-A-3 808 250, US-A-3 975 426 oder US-A-4 016 143 beschriebenen Verfahren zugänglich sind.

Besonders bevorzugt besteht die Komponente b) aus Polyolen der beispielhaft genannten Art des Molekulargewichtsbereichs 62 bis 6000 und einer Hydroxylfunktionalität von 2 bis 4, gegebenenfalls endständige, aromatische, primäre Aminogruppen aufweisenden Polyetherpolyaminen und den obengenannten aliphatischen Diaminen.

Bei den als Komponente b4) gegebenenfalls anwesenden Katalysatoren handelt es sich vorzugsweise um tertiäre Amine, die vorzugsweise keine gegenüber Isocyanatgruppen reaktionsfähigen Gruppen und ein Molekulargewicht von 101 bis 250 aufweisen. In Betracht kommen insbesondere die an sich bekannten tert. Aminkatalysatoren der Polyurethanchemie wie beispielsweise Triethylamin, Tributylamin, N-Methyl-morpholin, N-Ethylmorpholin, N-Cocomorpholin, N,N,N',N'-Tetramethylethylendiamin, 1,4-Diazabicyclo-(2,2,2)-octan, N-Methyl-N'-dimethylamino-ethylpiperazin, N,N-Dimethylcyclohexylamin, N,N,N',N'-Tetramethyl-1,3-butandiamin, N,N-Dimethylimidazol-β-phenylmethylamin, 1,2-Dimethylimidazol oder 2-Methylimidazol. Zu den bevorzugten tert. Aminen gehören N,N-Dimethylbenzylamin oder die Verbindungen der Formeln

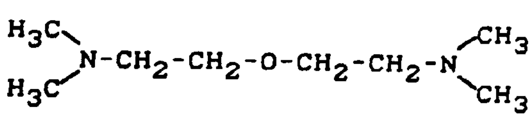

und

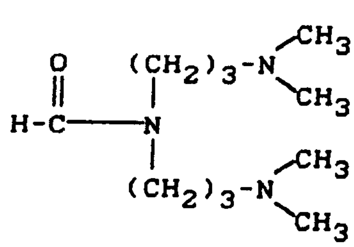

wobei die letztgenannten der beiden Verbindungen und 1,4-Diazabicyclo-(2,2,2)-octan besonders bevorzugt sind, da sie unter den Bedingungen des erfindungsgemäßen Verfahrens nicht flüchtig und weitgehend geruchlos sind.

Die tert. Amine liegen vorzugsweise in den erfindungsgemäß verwendeten Systemen in einer solchen Menge vor, daß deren Gehalt an tert. Aminstickstoffatom unter Einbeziehung der gegebenenfalls in der Komponente b) vorliegenden tert. Aminstickstoffatome bei mindestens 0,005 Mol/100 g, vorzugsweise mindestens 0,01 Mol/100 g des gesamten Reaktionsgemischs (Summe der Komponenten a) und b)) liegt. Vorzugsweise werden die tert. Amine auch bei Vorliegen einer innerhalb der genannten Bereiche liegenden Menge an tert. Aminstickstoffatom in der Komponente b) zusätzlich mitverwendet und zwar in einer solchen Menge, die einem Gehalt der der Systeme (Summe der Komponenten a) und b)) an tert. Aminstickstoff, herrührend von der Komponente b), von 0,005 bis 0,15 Mol/100 g entspricht.

Mittels der erfindungsgemäß eingesetzten Zweikomponenten-Polyurethanklebstoffsysteme mit Epoxidanteil können Substanzen aus SMC, PPS oder anderen Kunststoffen, Metallen wie z.B. Stahl, verzinkter Stahl, Aluminium, Holz oder Glasverklebt werden.

Die Anwendung des Zweikomponenten-Polyurethanklebstoffes erfolgt vorzugsweise durch kontinuierliches Mischen der beiden Komponenten a) und b) entweder in einem Rührermischer, in einem statischen Mischer oder in einem Gegenstrom-Mischer und sofortigen Auftrag des fertigen Klebstoffes als Raupe auf mindestens eines der zu verklebenden Substrate. Eine Vorbehandlung der Substratoberflächen im Sinne einer Reinigung, Aufrauhung oder einer sonstigen Vorbehandlung ist häufig nicht erforderlich.

Die Komponente b) liegt in den erfindungsgemäßen verwendeten Systemen in einer solchen Menge vor, daß das NCO/OH - Äquivalentverhältnis bezogen auf die Isocyanat - Menge der Komponente a) und die Hydroxylgruppen der Komponente b) weniger als 2:1 beträgt.

Die mit Klebstoff versehenen Substrate werden zusammengelegt, fixiert und entweder bei Raumtemperatur aushärten gelassen bzw. einem Härtungsprozeß bei erhöhter Temperatur unterworfen. Bei erhöhter Temperatur kann der Zustand der Handfestigkeit schneller erreicht werden als bei Raumtemperatur.

Für eine Aushärtung bei erhöhter Temperatur lassen sich übliche Vorrichtungen wie Heizpressen, Heiz-Werkzeuge, Heizschränke, Heißluftanlagen und Induktionsheizvorrichtungen verwenden.

Die gewünschte offene Zeit bzw. Aushärtezeit kann durch die Wahl der Aushärtetemperatur und Wahl des Katalysators b3) in weiten Grenzen variiert werden.

Anwendungstechnisch interessant ist die Möglichkeit, die Komponenten a und b im no-mix-Verfahren zu verarbeiten. Hier werden die beiden Komponenten jeweils für sich in dünner Schicht auf die Substrate aufgetragen und diese nach Zusammenfügen verpreßt.

Interessant ist ferner die geringe Aufwandmenge an Epoxid, die nicht Größenordnungen wie bei den eingangs erwähnten IPN-Systemen erreichen muß. Angesichts des höheren Preises des Epoxids im Gegensatz zum Isocyanat ist das ein großer wirtschaftlicher Vorteil.

Ein weiterer Vorteil des erfindungsgemäß eingesetzten Klebstoffs besteht darin, daß er lösungsmittelfrei verarbeitet werden kann.

Patentbeispiele

Ausgangsverbindungen:

Roh-MDI:

4,4'-Diisocyanatodiphenylmethan im Gemisch mit seinen Isomeren und höheren Homologen, wie sie durch Phosgenierung von Anilin-Formaldehyd-Kondensationsprodukten erhalten werden, NCO-Gehalt 30,4 %, Viskosität $\eta_{25°C}$ = 80 mPas.

Epoxid:

Bisglycidyletherderivat des Bisphenols A, welches auch noch Hydroxylfunkionen enthalten kann, der Formel

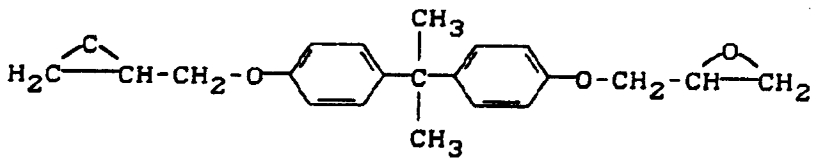

Polyether 1:

Polypropylenglykol mit $\overline{M}$ = 2000 g/Mol;
OH-Zahl = 56 mg KOH/g.

Polyether 2:

Polypropylenglykol mit $\overline{M}$ = 220 g/Mol;
OH-Zahl = 515 mg KOH/g.

Polyether 3:

Mit Propylenoxid auf Pentaerythrit gestarteter Polyether mit $\overline{M}$ = 410 g/Mol; OH-Zahl = 550 mg KOH/g.

Polyether 4:

Mit Propylenoxid auf Ethylendiamin gestarteter Polyether mit einem mittleren Molekulargewicht $\overline{M}_w$ 470 und einer OH-Zahl von 480.

Katalysator 1:

Eine Verbindung der Struktur:

$$OHC-N[(CH_2)_3-N(CH_2)_2]_2$$

IPDA:

5-Amino-1-aminomethyl-1,3,3-trimethyl-cyclohexan.

Beispiel 1 (erfindungsgemäß verwendete Isocyanatkomponente)

900 Gew.-Teile Roh-MDI und 100 Gew-Teile Epoxid werden bei Raumtemperatur gut vermischt und mit 6,6 g einer 1-molaren Lösung von p-Toluolsulfonsäuremethylester in Roh-MDI als Lösungsmittel versetzt. Die Mischung wird im Anschluß für eine halbe Stunde auf 120°C erhitzt. Isocyanatgehalt: 27,4 %.

Beispiel 2 (erfindungsgemäß verwendete Isocyanatkomponente)

800 Gew.-Teile Roh-MDI und 200 Gew.-Teile Epoxid werden wie in Beispiel 1 vermischt, mit 6,6 g einer 1-molaren Lösung von p-Toluolsulfonsäuremethylester in Roh-MDI versetzt und eine halbe Stunde auf 120°C erhitzt. Isocyanatgehalt: 24,3 %.

Beispiel 3 (erfindungsgemäß verwendete Isocyanatkomponente)

700 Gew.-Teile Roh-MDI und 300 Gew.-Teile Epoxid werden wie in Beispiel 1 vermischt, mit der gleichen Menge p-Toluolsulfonsäuremethylester versetzt und für eine halbe Stunde auf 120°C erhitzt. Isocyanatgehalt: 21,3 %.

Beispiel 4 (erfindungsgemäß verwendete Polyolkomponente)

300 Gew.-Teile Polyether 1, 100 Gew-Teile Polyether 2 und 100 Gew.-Teile Polyether 3 werden zusammengegeben und gut vermischt. Des weiteren werden zugegeben 1,6 Gew.-Teile Katalysator 1, 6,65 Gew.-Teile IPDA und 40,7 Gew.-Teile einer Paste aus 65 % Zeolith, angerührt in 35 % Rizinusöl. Die OH-Zahl der

Mischung beträgt 237,0 mg KOH/g.

Prüfung der klebtechnischen Eigenschaften

Für die Prüfung der Scherfestigkeiten wurden einschnittig überlappte Verbindungen aus dem zu verklebenden Material (SMC, Stahl, Aluminium, verzinkter Stahl) hergestellt. Die Klebfugendicke betrug 0,8 mm, die Probenbreite 20 mm, die Überlappungslänge 10 mm. Die Abbindung erfolgte im Labortrockenschrank bei verschiedenen Temperaturen für verschiedene Verweilzeiten unter Benutzung von Fixiervorrichtungen. Die SMC-Prüfkörfper wurden mit Heizbacken ausgehärtet.

Die folgenden Klebstoffmischungen wurden verwendet:

| Isocyanat-Komponente Beispiel | Hydroxyl-Komponente Beispiel | Gewichts-Verhältnis NCO:OH-Komp. | Kennzahl | Mischung |
|---|---|---|---|---|
| 1 | 4 | 0,88:1 | | A |
| 2 | 4 | 1:1 | 135 | B |
| 3 | 4 | 1,13:1 | | C |

Die Abmischung der beiden Komponenten erfolgte unter Luftabschluß im Polyethylenbeutel. Es wurden mehrere Prüfkörper hergestellt und dann der Mittelwert der Zugscherfestigkeit (gemäß DIN 53 283) errechnet.

Die Kennzahl ist definiert als:

$$\text{Kennzahl} = \frac{\text{Mol NCO}}{\text{Mol OH}} \cdot 100$$

Versuche mit Mischung A

a) Prüfung bei Raumtemperatur

Abbindebedingungen: 30 min 180°C; + 30 min Raumtemperatur; + 20 min 220°C.

| Substrat | Stahl geölt | Stahl entfettet |
|---|---|---|
| Zugscherfestigkeit ($N/mm^2$) | 25,2 | 27,4 |

b) Prüfung bei Raumtemperatur

Abbindebedingungen: 30 min bei 220°C

| Substrat | Stahl geölt | Stahl entfettet |
|---|---|---|
| Zugscherfestigkeit ($N/mm^2$) | 25,1 | 25,8 |

c) Prüfung bei 85°C

Abbindebedingungen: 30 min 180°C, + 30 min Raumtemperatur, + 20 min 220°C

| Substrat | Stahl geölt | Stahl entfettet |
|---|---|---|
| Zugscherfestigkeit ($N/mm^2$) | 8,9 | 11,6 |

d) Prüfung bei 85°C
Abbindebedingungen: 30 min bei 220°C

| Substrat | Stahl geölt | Stahl entfettet |
|---|---|---|
| Zugscherfestigkeit ($N/mm^2$) | 10,8 | 10,1 |

Versuche mit Mischung B

a) Prüfung bei Raumtemperatur
Abbindebedingungen: 24 min bei Raumtemperatur

| Substrat | SMC |
|---|---|
| Zugscherfestigkeit ($N/mm^2$) | 9,2* |

* 100 % Fügeteilversagen

b) Prüfung bei Raumtemperatur
Abbindebedingungen: 2 min 120°C, + 30 min Raumtemperatur, + 20 min 140°C

| Substrat | SMC |
|---|---|
| Zugscherfestigkeit ($N/mm^2$) | 8,5* |

* 100 % Fügeteilversagen

c) Prüfung bei Raumtemperatur
Abbindebedingungen: 30 min 180°C

| Substrat | Stahl geölt | Stahl entfettet | Aluminium |
|---|---|---|---|
| Zugscherfestigkeit ($N/mm^2$) | 22,9 | 23,4 | 13,9 |

d) Prüfung bei Raumtemperatur
Abbindebedingungen: 30 min 180°C, + 30 min Raumtemperatur, + 20 min 220°C

| Substrat | Stahl geölt | Stahl entfettet | Aluminium |
|---|---|---|---|
| Zugscherfestigkeit ($N/mm^2$) | 29,7 | 31,4 | 20,4 |

e) Prüfung bei Raumtemperatur
Abbindebedingungen: 30 min 220°C

| Substrat | Stahl geölt | Stahl entfettet | Aluminium | verzinktes Blech |
|---|---|---|---|---|
| Zugscherfestigkeit ($N/mm^2$) | 22,0 | 25,8 | 15,5 | 23,4 |

Versuche mit Mischung C

a) Prüfung bei Raumtemperatur
Abbindebedingungen: 30 min 180°C; + 30 min Raumtemperatur; + 20 min 220°C,

| Substrat | Stahl geölt | Stahl entfettet |
|---|---|---|
| Zugscherfestigkeit ($N/mm^2$) | 32,8 | 32,1 |

b) Prüfung bei Raumtemperatur
Abbindebedingungen: 30 min bei 220°C

| Substrat | Stahl geölt | Stahl entfettet |
|---|---|---|
| Zugscherfestigkeit ($N/mm^2$) | 33,9 | 34,7 |

c) Prüfung bei 85°C
Abbindebedingungen: 30 min 180°C, + 30 min Raumtemperatur, + 20 min 220°C

| Substrat | Stahl geölt | Stahl entfettet |
|---|---|---|
| Zugscherfestigkeit ($N/mm^2$) | 11,4 | 12,6 |

d) Prüfung bei 85°C

Abbindebedingungen: 30 min bei 220°C

| Substrat | Stahl geölt | Stahl entfettet |
|---|---|---|
| Zugscherfestigkeit ($N/mm^2$) | 13,5 | 16,8 |

e) Prüfung bei 150°C
Abbindebedingungen: 30 min 180°C, + 30 min Raumtemperatur, + 20 min 220°C

| Substrat | Stahl geölt | Stahl entfettet |
|---|---|---|
| Zugscherfestigkeit ($N/mm^2$) | 2,7 | 2,6 |

f) Prüfung bei 150°C
Abbindebedingungen: 30 min bei 220°C

| Substrat | Stahl geölt | Stahl entfettet |
|---|---|---|
| Zugscherfestigkeit ($N/mm^2$) | 2,4 | 3,7 |

g) Prüfungen bei 150°C bis 200°C Abbindebedingungen: 30 min bei 220°C Oberflächenbehandlung: Beflammen Substrat: Polyphenylensulfid gefüllt mit 45 % Glasfaser

| Prüftemperatur: | 150° C | 180° C | 200° C |
|---|---|---|---|
| Zugscherfestigkeit ($N/mm^2$) | 7,5 | 3,9 | 3,1 |

No-Mix-Anwendung:

Beispiel 5

300 Gew.-Teile Polyether 1, 100 Gew.-Teile Polyether 4, 100 Gew.-Teile Polyether 2 und 6,4 Gew.-Teile IPDA werden zusammengegeben und gut vermischt. Die OH-Zahl der Polyolkomponente beträgt 247,3 mg KOH/g.

Klebeversuch:

2 Kartenblätter werden einseitig halb mit der Polyolkomponente aus Beispiel 5 beziehungsweise mit der Isocyanatkomponente aus Beispiel 1 mit Hilfe eines Glasstabes so dünn und gleichmäßig wie möglich bestrichen.

Dann werden die beiden Kartenblätter mit den bestrichenen Seiten zueinander angeordnet und so zusammengelegt, daß ein einschnittig sich überlappender Prüfkörper entsteht, und dieser wird nach Abdecken mit einer Glasscheibe mit einem 250 g Gewicht beschwert.

Nach Liegen über Nacht ist der Prüfkörper aus den Kartenblättern nur noch so zu zerreißen, daß der Riß parallel zur Klebeschicht, jedoch in einem der Kartenblätter verläuft.

## Patentansprüche

1. Verwendung eines Zweikomponenten-Systems, enthaltend eine Komponente a) mit wenigstens einem Isocyanat und wenigstens einem Epoxid und eine Komponente b) mit wenigstens einer NCO-reaktiven Verbindung, dadurch gekennzeichnet, daß enthalten sind:
   a) eine lagerstabile Mischung mit
   a1) wenigstens einem organischen Polyisocyanat und
   a2) wenigstens einem durch Umsetzung mit einem Alkylierungsmittel gegenüber der Reaktion mit a1) stabilisierten Epoxid und
   b) wenigstens eine lagerstabile Komponente, ausgewählt aus:
   b1) einer Verbindung, die zugleich wenigstens eine isocyanatreaktive Hydroxyl- und wenigstens eine isocyanatreaktive Aminogruppe trägt oder
   b2) einer Verbindung mit wenigstens 2 Hydroxylgruppen und gegebenenfalls b3) zusätzlich einer Verbindung mit wenigstens 2 Aminogruppen oder
   beliebige Mischungen daraus, in einer Menge, daß das NCO/OH-Äquivalentverhältnis bezogen auf die Isocyanat-Menge der Komponente a) und die Hydroxylgruppen der Komponente b) weniger als 2:1 beträgt, als Zweikomponenten-Klebstoff.

2. Verwendung gemäß Anspruch 1, dadurch gekennzeichnet, daß in den Teilkomponenten a) und b) weitere übliche Hilfsstoffe enthalten sind.

3. Verwendung gemäß wenigstens einem der vorhergehenden Ansprüche, dadurch gekennzeichnet, daß in der Teilkomponente b) wenigstens ein Katalysator b4) aus der Gruppe der tertiären Amine enthalten ist in einer derartigen Menge, daß die Gesamtmischung aus a) und b) pro 100 g mindestens 0,005 Mol tertiären Aminstickstoff enthält unter Berücksichtigung des gegebenenfalls in der Komponente b1) enthaltenen tertiären Stickstoffs.

4. Verwendung nach wenigstens einem der vorhergehenden Ansprüche, dadurch gekennzeichnet, daß das Polyisocyanat a1) ein bei Raumtemperatur flüssiges Polyisocyanat, ein Polyisocyanatgemisch der Diphenylmethanreihe oder ein bei Raumtemperatur flüssiges Derivat eines derartigen Polyisocyanates bzw. Polyisocyanatgemisches ist.

5. Verwendung nach wenigstens einem der vorhergehenden Ansprüche, dadurch gekennzeichnet, daß das Epoxid a2) ein Bisglycidyletherderivat des Bisphenol A ist.

6. Verwendung nach wenigstens einem der vorhergehenden Ansprüche, dadurch gekennzeichnet, daß die Komponente b) Polyole mit einem Molekulargewicht von 62-6000, wenigstens ein niedermolekulares Diamin und gegebenenfalls ein Polyetherpolyamin enthält.

7. Verwendung nach wenigstens einem der vorhergehenden Ansprüche, dadurch gekennzeichnet, daß die Komponente b) eine Funktionalität von 2 bis 5 und ein Molekulargewicht von 62 bis 12 000 aufweist.

8. Verwendung nach wenigstens einem der vorhergehenden Ansprüche, dadurch gekennzeichnet, daß in der Komponente a) 5 bis 40 Gew.-% des Bisglycidylethers des Bisphenols A oder äquivalente Mengen anderer epoxidhaltiger Verbindung enthalten sind.

9. Verwendung gemäß wenigstens einem der vorhergehenden Ansprüche, dadurch gekennzeichnet, daß das zur Stabilisierung des Epoxids verwendete Alkylierungsmittel Methyliodid, Dimethylsulfat oder ein Sulfonsäurealkylester mit einem Molekulargewicht von 110 bis 250°C mit 1 bis 4 C-Atomen im Alkylrest ist.

10. Verwendung gemäß wenigstens einem der vorhergehenden Ansprüche, dadurch gekennzeichnet, daß die Komponente b2) ein katalytisch aktives, wenigstens ein tertiäres Stickstoffatom enthaltendes Polyol ist.

## Claims

1. The use of a two-component system containing a component a) with at least one isocyanate and at least

one epoxide and a component b) with at least one NCO-reactive compound, characterized in that
a) a storable mixture containing
a1) at least one organic polyisocyanate and
a2) at least one epoxide stabilized against the reaction with a1) by reaction with an alkylating agent and
b) at least one storable component selected from:
b1) a compound which contains at least one isocyanate-reactive hydroxyl group and at least one isocyanate-reactive amino group or
b2) a compound containing at least two hydroxyl groups and, optionally,
b3) additionally a compound containing at least two amino groups
or mixtures thereof are present in such a quantity that the NCO:OH equivalent ratio, based on the isocyanate quantity of component a) and the hydroxyl groups of component b), is less than 2:1,
as a two-pack adhesive.

2. The use claimed in claim 1, characterized in that components a) and b) contain other typical auxiliaries.

3. The use claimed in at least one of the preceding claims, characterized in that component b) contains at least one catalyst b4) from the group of tertiary amines in such a quantity that the total mixture of a) and b) contains at least 0.005 mol tertiary amine nitrogen per 100 g taking into account the tertiary nitrogen optionally present in component b1).

4. The use claimed in at least one of the preceding claims, characterized in that the polyisocyanate a1) is a polyisocyanate liquid at room temperature, a polyisocyanate mixture of the diphenyl methane series or a derivative of such a polyisocyanate or polyisocyanate mixture which is liquid at room temperature.

5. The use claimed in at least one of the preceding claims, characterized in that epoxide a2) is a bisglycidyl ether derivative of bisphenol A.

6. The use claimed in at least one of the preceding claims, characterized in that component b) contains polyols having a molecular weight of 62 to 6000, at least one low molecular weight diamine and optionally a polyether polyamine.

7. The use claimed in at least one of the preceding claims, characterized in that component b) has a functionality of 2 to 5 and a molecular weight of 62 to 12,000.

8. The use claimed in at least one of the preceding claims, characterized in that component a) contains 5 to 40% by weight of the bis-glycidyl ether of bisphenol A or equivalent quantities of other epoxide-containing compounds.

9. The use claimed in at least one of the preceding claims, characterized in that the alkylating agent used to stabilize the epoxide is methyl iodide, dimethyl sulfate or a sulfonic acid alkyl ester having a molecular weight of 110 to 250°C and containing 1 to 4 carbon atoms in the alkyl radical.

10. The use claimed in at least one of the preceding claims, characterized in that component b2) is a catalytically active polyol containing at least one tertiary nitrogen atom.

## Revendications

1. Utilisation d'un système à deux composants, contenant un composant a) ayant au moins un isocyanate et au moins un époxyde, et un composant b) ayant au moins un composé réactif vis-à-vis du groupe NCO, caractérisée par la présence :
a) d'un mélange stable à l'entreposage avec
a1) au moins un polyisocyanate organique et
a2) au moins un époxyde stabilisé par réaction avec un agent alkylant vis-à-vis de la réaction avec a1) et
b) d'au moins un composant stable à l'entreposage, choisi entre :
b1) un composé qui porte en même temps au moins un groupe hydroxyle réactif vis-à-vis d'un isocyanate et au moins un groupe amino réactif vis-à-vis d'un isocyanate, ou bien

b2) un composé portant au moins deux groupes hydroxyle et le cas échéant, en supplément, b3) un composé portant au moins deux groupes amino, ou bien,

des mélanges quelconques de ces composants, en une quantité telle que le rapport des équivalents NCO/OH, par rapport à la quantité d'isocyanate du composant a) et aux groupes hydroxyle du composant b), s'élève à une valeur inférieure à 2:1,

comme adhésif à deux composants.

**2.** Utilisation suivant la revendication 1, caractérisée en ce que les composants partiels a) et b) contiennent d'autres substances auxiliaires classiques.

**3.** Utilisation suivant l'une au moins des revendications précédentes, caractérisée en ce que le composant partiel b) contient au moins un catalyseur b4) du groupe des amines tertiaires, en une quantité telle que le mélange total de a) et b) contienne, pour 100 g, au moins 0,005 mole d'azote d'amine tertiaire, compte tenu de l'azote tertiaire éventuellement présent dans le composant b1).

**4.** Utilisation suivant au moins l'une des revendications précédentes, caractérisée en ce que le polyisocyanate a1) est un polyisocyanate liquide à la température ambiante, un mélange de polyisocyanates de la série du diphénylméthane ou un dérivé, liquide à la température ambiante, d'un tel polyisocyanate ou d'un tel mélange de polyisocyanates.

**5.** Utilisation suivant au moins l'une des revendications précédentes, caractérisée en ce que l'époxyde a2) est un dérivé d'éther de bisglycidyle du bisphénol A.

**6.** Utilisation suivant au moins l'une des revendications précédentes, caractérisée en ce que le composant b) contient des polyols ayant un poids moléculaire de 62 à 6000, au moins une diamine de bas poids moléculaire et, le cas échéant, une polyétherpolyamine.

**7.** Utilisation suivant l'une au moins des revendications précédentes, caractérisée en ce que le composant b) présente une fonctionnalité de 2 à 5 et à un poids moléculaire de 62 à 12 000.

**8.** Utilisation suivant au moins l'une des revendications précédentes, caractérisée en ce que le composant a) contient 5 à 40 % en poids de l'éther de bisglycidyle du bisphénol A ou des quantités équivalentes d'autres composés contenant un époxyde.

**9.** Utilisation suivant au moins l'une des revendications précédentes, caractérisée en ce que l'agent alkylant utilisé pour stabiliser l'époxyde est l'iodure de méthyle, le sulfate de diméthyle ou un ester alkylique d'acide sulfonique d'un poids moléculaire de 110 à 250°C, ayant 1 à 4 atomes de carbone dans le reste alkyle.

**10.** Utilisation suivant l'une au moins des revendications précédentes, caractérisée en ce que le composant b2) est un polyol doué d'activité catalytique, contenant au moins un atome d'azote tertiaire.